# EUROPÄISCHE PATENTSCHRIFT

(11) **EP 1 980 306 B1**
(45) Veröffentlichungstag und Bekanntmachung des Hinweises auf die Patenterteilung: **28.01.2009**
(21) Anmeldenummer: 07006872.1
(22) Anmeldetag: 02.04.2007
(51) Int. Cl.: B01D 33/21

(54) **Filter- oder Reaktoreinsatz**
Filter or reactor insert
Insert de filtre ou de réacteur

(43) Veröffentlichungstag der Anmeldung: 15.10.2008
(73) Patentinhaber: Grundfos Management A/S, 8850 Bjerringbro (DK)
(72) Erfinder: Beldring, Finn, 2830 Virum (DK); Rasmussen, Christian, 8830 Tjele (DK)
(74) Vertreter: Hemmer, Arnd

(56) Entgegenhaltungen:
- US-A- 4 698 156
- US-A- 4 975 188

## Beschreibung

Die Erfindung betrifft einen Filter- oder Reaktoreinsatz sowie eine Filter- oder Reaktorvorrichtung mit einem solchen Einsatz.

Es sind Filtervorrichtungen beispielsweise für die Abwasserreinigung bekannt, welche scheibenförmige Filterelemente aus einem porösen Material aufweisen, wobei die zu filtrierende Flüssigkeit durch die Scheibenoberfläche in das Innere der Scheiben eintritt und im Inneren der Scheibe zum Zentrum der Scheibe geführt wird. Dort ist die Scheibe an einer drehbaren Hohlwelle befestigt, welche gleichzeitig zur Abfuhr der gereinigten Flüssigkeit dient. Üblicherweise sind mehrere dieser Filterelemente an einer gemeinsamen Hohlwelle angeordnet, wobei die gesamte Anordnung von Filterelementen einen Filtereinsatz bildet, welcher in ein rohrförmiges Gehäuse eingesetzt ist.

Auch sind Reaktorvorrichtungen bekannt, bei welchen Reaktorelemente verwendet werden, die scheibenförmig ausgebildet und an einer drehbaren Welle befestigt sind. Auf den Scheiben befinden sich beispielsweise Bakterienkulturen, welche zur Abwasserreinigung eingesetzt werden. Diese scheibenförmigen Reaktorelemente bilden gemeinsam mit der sie tragenden Welle einen Reaktoreinsatz, welche in einem rohrförmigen Gehäuse angeordnet wird.

Bei einer großen Anzahl von hintereinander angeordneten Filter- oder Reaktorelementen an einer gemeinsamen Welle ergibt sich insgesamt eine große Länge des Filter- oder Reaktoreinsatzes. Hieraus ergeben sich Probleme bei der Lagerung der Welle im inneren des Gehäuses, zumal das Gehäuse häufig von einem relativ instabilen Kunststoffrohr gebildet wird.

Es ist Aufgabe der Erfindung einen verbesserten Filter- oder Reaktoreinsatz sowie eine zugehörige Filter- oder Reaktorvorrichtung zu schaffen, welche eine verbesserte Lagerung der zentralen Welle aufweisen, bzw. ermöglichen.

Diese Aufgabe wird durch einen Filter- oder Reaktoreinsatz mit den in Anspruch 1 angegebenen Merkmalen sowie durch eine Filter- oder Reaktorvorrichtung mit den im Anspruch 19 angegebenen Merkmalen gelöst. Bevorzugte Ausführungsformen ergeben sich aus den zugehörigen Unteransprüchen, der nachfolgenden Beschreibung sowie den beigefügten Zeichnungen.

Der erfindungsgemäße Filter- oder Reaktoreinsatz weist eine zentrale Welle auf, welche drehbar gelagert ist, insbesondere in einer Filter- oder Reaktorvorrichtung drehbar gelagert werden kann. An dieser Welle sind drehfest Filter- und/oder Reaktorelemente angeordnet, je nach Einsatzweck. Als Filterelemente können beispielsweise die oben angesprochenen porösen Scheiben Verwendung finden, in welche Fluid von der Oberfläche her eindringen kann und im inneren zu der zentralen Welle, welche hohl ausgebildet sein kann, geführt werden kann. Ein solcher Filter kann zur Abwasserreinigung eingesetzt werden. Alternativ ist die Ausgestaltung als Reaktor denkbar, bei welcher die Reaktorelemente, beispielsweise Reaktorscheiben, drehfest mit der Welle verbunden und von Bakterienkulturen besiedelt sind. Für die Ausführung der nachfolgend näher beschriebenen Erfindung zur Verbesserung der Lagerung der Welle, kommt es nicht darauf an, ob hier Filter- oder ReaktorElemente zum Einsatz kommen. Insofern können hier die Reaktorelemente auch als Filterelemente im Sinne der Erfindung und ein Reaktoreinsatz als Filtereinsatz im Sinne der Erfindung angesehen werden.

Erfindungsgemäß ist zumindest eine Lagereinrichtung vorgesehen, wobei die Lagereinrichtung im Zentralbereich ein Lager aufweist, in welchem die Welle drehbar gelagert ist. Die Lagereinrichtung dient dazu, die Welle im Inneren eines Rohres, welches als Gehäuse für den Filtereinsatz dient, zu lagern. Dazu weist die Lagereinrichtung zumindest ein Stützelement auf, welches die Verbindung mit dem den Filter- bzw. Reaktoreinsatz aufnehmenden Rohr herstellt. Dieses Stützelement ist mit dem Lager über zumindest ein Verbindungselement verbunden. Das Verbindungselement dient dazu, dass Lager und das Stützelement radial beabstandet zueinander zu halten. Das Stützelement ist radial außen liegend angeordnet, da es mit der Innenwandung des Rohres zur Fixierung der Lagereinrichtung in Kontakt treten soll. Das Lager, welches die Welle lagert, ist jedoch vorzugsweise zentral, d.h. mittig in dem Rohr angeordnet. Ferner ist in oder an der Lagereinrichtung zumindest ein Spannelement vorgesehen, über welches das Stützelement im Inneren des Rohres, welches den Filter- oder Reaktoreinsatz aufnimmt, an dessen Innenwandung verspannbar ist.

Die Lagereinrichtung ist erfindungsgemäß Teil des Filter- oder Reaktoreinsatzes, so dass an diesem Einsatz alle zur Lagerung der Welle in einem Rohr erforderlichen Bauteile integriert oder als Zubehör des Filter- oder Reaktoreinsatzes vorgesehen sind. Das Rohr selber, welches den Filter- oder Reaktoreinsatz aufnimmt, muss daher keine speziellen Merkmale oder Ausgestaltungen aufweisen, um den Filter- oder Reaktoreinsatz aufnehmen und dessen Welle lagern zu können. So kann ein herkömmliches Rohr als Gehäuse für den Filter- oder Reaktoreinsatz dienen, ohne dass spezielle Anpassungen erforderlich sind.

Vorzugsweise ist der Filter- oder Reaktoreinsatz in Längsrichtung in das Rohr, d.h. von einem Stirnende her einschiebbar. Zum Einschieben bzw. ggf. zum Wiederentnehmen des Einsatzes ist das zumindest eine Spannelement löschbar, so dass das Stützelement nicht mit der Innenwandung des Rohres verspannt ist und gemeinsam mit dem gesamten Filter- oder Reaktoreinsatz relativ zu dem umgebenden Rohr bewegt, insbesondere aus diesem entnommen oder in dieses eingesetzt werden kann.

Zur Fixierung der Lagereinrichtung im Inneren des Rohres ist das Spannelement in eine gespannte Position bringbar, wodurch die Stützelemente vorzugsweise kraftschlüssig mit der Innenwandung des Rohres in Eingriff gebracht werden und auf diese Weise die Lagereinrichtung im Inneren des Rohres verspannen. In diesem Zustand ist die Lagereinrichtung in radialer und vorzugsweise auch axialer Richtung im Inneren des Rohres fixiert und kann die am Lager auftretenden Lagerkräfte über das Verbindungselement und das Stützelement auf das umgebende Rohr übertragen. Auf diese Weise wird eine stabile Lagerung für die Welle geschaffen. Dies ist insbesondere bei langen Filter- oder Reaktoreinsätzen von Vorteil, da eine Lagerung der Welle auch in Zwischenpositionen zwischen den beiden Axialenden im Inneren des Rohres möglich wird. Die dazu erforderlichen Lagerelemente können problemlos mit dem Filter- oder Reaktoreinsatz in Längsrichtung in das Rohr eingeschoben und in umgekehrter Richtung auch wieder herausgezogen werden. Vorzugsweise ist die Lagereinrichtung und sind insbesondere das Verbindungs- und das Stützelement so ausgebildet, dass sie Kräfte in allen Richtungen in der Radialebene, d. h. in einer Ebene quer zur Längsrichtung der Welle auf das Rohr übertragen können. Dabei ist die Ausgestaltung insbesondere so gewählt, dass das Lager in radialer Richtung fest im Inneren des Rohres gehalten wird.

Das Spannelement ist vorzugsweise so ausgebildet, dass das zumindest eine Stützelement in radialer Richtung im Inneren eines Rohres, welches den Einsatz (Filtereinsatz oder Reaktoreinsatz) aufnimmt, verspannbar ist. Das heißt das Spannelement ist so ausgebildet, dass das Stützelement Druckkräfte auf die Innenwandung des Rohres ausübt, so dass die ganze Lagereinrichtung vorzugsweise in radialer Richtung spielfrei im Inneren des Rohres gehalten wird. Darüber hinaus kann durch die aufgebrachten Stützkräfte eine Haftreibung zwischen Stützelement und Innenwandung des Rohres erzeugt werden, welche die Lagereinrichtung im Inneren des Rohres in Umfangsrichtung kraftschlüssig und vorzugsweise ebenfalls in axialer Richtung kraftschlüssig fixiert. Die Kraft zum Verspannen in radialer Richtung kann von den Spannelementen direkt oder auch indirekt erzeugt werden.

Gemäß einer bevorzugten Ausführungsform ist das Stützelement ein Stützring, welcher zur Anlage an der Innenwandung eines den Filter- oder Reaktoreinsatz aufnehmenden Rohres ausgebildet ist. Der Stützring kann dabei als geschlossener Ring ausgebildet sein, welcher in Umfangsrichtung an der Innenwandung des Rohres zur Anlage kommt. Alternativ können mehrere Stützelemente ausgebildet sein, welche an verschiedenen, über den Umfang des Rohres verteilten Positionen an der Innenwandung des Rohres zur Anlage kommen. Durch diese Ausgestaltung können sich die mehreren Stützelemente in entgegengesetzten radialen Richtungen an der Innenwandung des Rohres abstützen und somit die Lagereinrichtung und damit das Lager in allen radialen Richtungen spielfrei im Inneren des Rohres halten. Im Übrigen können solche Verspannkräfte aufgebracht werden, dass auch in den anderen Lagerrichtungen das Lagerelement vorzugsweise kraftschlüssig an der Innenwandung des Rohres fixiert werden kann. Die mehreren Stützelemente können z.B. als Ringsegmente ausgeführt sein.

Das Erzeugen einer Verspannkraft kann im Falle eines Stützringes beispielsweise dadurch erfolgen, dass der Stützring in seiner Länge veränderbar ist. Durch Vergrößerung der Länge des Stützringes in Umfangsrichtung wird der Stützring, da sich sein Durchmesser erweitert, gegen die Innenwandung des Rohres gepresst. Durch entsprechendes Verkürzen kann der Stützring dann wieder gelöst werden, so dass er von der Innenwandung des Rohres aus der Anlage kommt oder zumindest die Haftreibung zwischen Stützring und Rohrinnenwandung derart verringert wird, dass der Stützring in axialer Richtung in dem Rohr verschiebbar ist, damit der Filter- oder Reaktoreinsatz in das Rohr eingesetzt oder aus diesem entnommen werden kann.

Weiter bevorzugt ist das Stützelement über zumindest eine Speiche, welche als Verbindungselement dient, mit dem Lager verbunden, wobei die Speiche vorzugsweise derart ausgebildet ist, dass der radiale Abstand zwischen Lager und Stützelement veränderbar ist, vorzugsweise zur Zentrierung des Lagers. Die Änderung des radialen Abstandes zwischen Lager und Stützelement kann zum einen zum Verspannen im Inneren eines Rohres, zum anderen aber auch oder alternativ nur zur Zentrierung des Lagers dienen. Da zum Verspannen das Stützelement oder die Stützelemente vorzugsweise in radialer Richtung im Inneren des Rohres bewegt werden, um gegen die Innenwandung des Rohres gedrückt zu werden, ist es erforderlich, entsprechend den Abstand zwischen Lager und Stützelement variieren zu können, um das Lager in vorbestimmter, insbesondere zentrierter Position halten zu können. Darüber hinaus kann das Verspannen auch direkt durch die Abstandsänderung zwischen Lager und Stützelement geschehen, indem durch diese Abstandsänderung das Stützelement gegen die Innenwandung des Rohres gedrückt wird. Dazu kann die zumindest eine Speiche beispielsweise in ihrer Länge veränderbar ausgebildet sein.

Besonders bevorzugt sind das Lager und der Stützring über zumindest drei, vorzugsweise in gleichen Winkelabständen zueinander angeordnete Speichen miteinander verbunden. Diese Ausgestaltung ermöglicht eine gute Zentrierung des Lagers und darüber hinaus eine gleichmäßige Kraftübertragung von dem Lager auf den Stützring bzw. die Stützelemente. Wie oben beschrieben, könnte der Stützring durch mehrere Stützelemente, welche z.B. Ringsegmente bilden, gebildet sein, wobei jedes Stützelement vorzugsweise mit einer der Speichen verbunden ist.

Weiter bevorzugt ist hier zumindest eine Speiche elastisch ausgebildet und/oder mit einem axialen Ende schwenkbar mit dem Lager und ihrem entgegengesetzten axialen Ende schwenkbar mit dem Stützelement verbunden. Durch diese Ausgestaltung wird die Änderung des Abstandes zwischen Lager und Stützelement, insbesondere zwischen Lager und einem Stützring, welche konzentrisch zueinander angeordnet sind, möglich. Die Speiche kann sich direkt in radialer Richtung erstrecken und dabei derart ausgebildet sein, dass sie ihre Länge in der radialen Richtung ändern kann. Dabei ist die Speiche vorzugsweise derart vorgespannt, dass Sie bestrebt ist, sich in der radialen Richtung auszudehnen.

Alternativ ist es möglich die Speichen so anzuordnen, dass sie sich zumindest im nicht verspannten Zustand der Lagereinrichtung nicht in radialer Richtung bezüglich der Längsachse der Welle bzw. der Drehachse des Lagers erstrecken. Das heißt bei dieser Ausgestaltung sind die Speichen länger als der radiale Abstand zwischen Lager und Stützelement und erstrecken sich somit geneigt zum Radius. Gleichzeitig sind die Speichen an ihren äußeren axialen Enden gelenkig bzw. elastisch mit dem Stützelement, insbesondere einem Stützring, und an der Innenseite mit dem Lager verbunden. Dies ermöglicht es, dass wenn Stützring und Lager um einen gemeinsamen Mittelpunkt, d.h. die Lagerachse gegeneinander verdreht werden, sich der Winkel zwischen Speiche und Radius verkleinern oder vergrößern kann, je nach Drehrichtung. Durch Verkleinern des Winkels verschwenkt die Speiche mehr zu der radialen Richtung hin, wodurch sich der radiale Abstand vom Lagermittelpunkt zum äußeren Ende der Speiche vergrößert.

Dies kann zum einen zum radialen Aufweiten des Stützringes und damit zu dessen Verspannen genutzt werden. Zum anderen kann dies in dem Fall, dass zum Verspannen der Stützring in Umfangsrichtung z.B. durch ein entsprechendes Spannelement verlängert wird, genutzt werden, um die Zentrierung des Lagers im Inneren des Stützringes beizubehalten.

Dass zumindest ein Spannelement ist bevorzugt so ausgebildet, dass es nach dem Einsetzen des Filter- oder Reaktoreinsatzes in ein Rohr von außen und/oder einem Axialende des Rohres betätigbar ist. Diese Ausgestaltung ermöglicht es, den Filter- oder Reaktoreinsatz zunächst in das Rohr einzusetzen und dann von außen oder vom Axialende her das oder die Spannelemente zu betätigen, um die zumindest eine Lagereinrichtung im Inneren des Rohres zu verspannen und damit zu fixieren. So müssen in dem Rohr keine Öffnungen oder Ähnliches in der Umfangswandung vorgesehen sein, um die Spannelemente zu betätigen. Derartige Öffnungen müssten aufwändig gedichtet werden. Besonders bevorzugt sind die Spannelemente von außen betätigbar, so dass die Filter- oder Reaktorvorrichtung nicht geöffnet werden muss. Alternativ ist es denkbar, dass die Spannelemente nach Öffnen zumindest eines axialseitigen Deckels, welcher das Rohr an einem Axialende verschließt, von diesem Axialende her betätigt werden können.

Gemäß einer besonderen Ausführungsform der Erfindung kann das Spannelement ein Spannring sein, welcher von außen um das den Filter- oder Reaktoreinsatz aufnehmende Rohr spannbar ist, um das Rohr an dem Stützelement zu verspannen. Bei dieser Ausgestaltung ist das Stützelement mit dem Verbindungselement vorzugsweise starr ausgebildet, so dass es in radialer Richtung keine Elastizität aufweist. Das Spannelement wird von außen um das Rohr gelegt und vorzugsweise so betätigt, dass es in Umfangsrichtung ähnlich einer Schlauchschelle verkürzt wird, wodurch das Rohr gegen das zuvor im Inneren angeordnete Stützelement gedrückt wird. Diese Ausgestaltung ist besonders zur Verwendung mit elastischen Rohren, beispielsweise Kunststoffrohren, wie sie in der Abwassertechnik verwendet werden, geeignet. Besonders bevorzugt wird das Spannelement dabei an einer axialen Position in Richtung der Längsachse des Filter- oder Reaktoreinsatzes bzw. der Längsachse der Welle angeordnet, an welcher sich im Inneren das Stützelement befindet, so dass das Spannelement von außen im wesentlichen direkt über dem Stützelement zu liegen kommt.

Gemäß einer weiteren bevorzugten Ausführungsform ist das zumindest ein Spannelement mit einem Betätigungselement versehen, welches sich ausgehend von dem Spannelement zu einem Axialende des Filter- oder Reaktoreinsatzes erstreckt, so dass es nach dem Einsetzten des Filter- oder Reaktoreinsatzes in ein Rohr von einem Axialende des Rohres her betätigbar, vorzugsweise drehend betätigbar ist. Über ein solches Betätigungselement ist es möglich, auch die Spannelemente, welche nach dem Einsetzen des Filter- oder Reaktoreinsatzes in ein Rohr im Inneren des Rohres, d.h. beabstandet von einer Öffnung am Axialende des Rohres gelegen sind, zu betätigen, um die Spannelemente so zu spannen, dass das Stützelement bzw. die Stützelemente der Lagereinrichtung an der Innenwandung des Rohres verspannt werden. Bevorzugt sind die Betätigungsmittel drehbar ausgebildet, d. h. es kann sich hierbei um Stangen handeln, welche sich vorzugsweise parallel zur Längsachse des Rohres erstrecken und um ihre Längsachse drehbar sind. Dazu können die Stangen beispielsweise an dem der Öffnung des Rohres zugewandten Axialende Köpfe aufweisen, welche mit einem Schraubenschlüssel in Eingriff bringbar sind, um die Stangen zu drehen. Am entgegengesetzten Axialende der Stangen bzw. Betätigungselemente, welche mit dem Spannelement in Wechselwirkung stehen, kann beispielsweise ein Gewinde ausgebildet sein, über welches das Spannelement betätigt wird. Ggf. können noch Getriebeelemente vorgesehen sein, um die Drehachse beispielsweise um 90° umlenken zu können.

Weiter bevorzugt sind bei dem Filter- oder Reaktoreinsatz mehrere Lagereinrichtungen vorgesehen, von denen jede jeweils zumindest ein Spannelement aufweist, wobei jede Lagereinrichtung jeweils mit einem Betätigungselement zur Betätigung des zu dieser Lagereinrichtung gehörigen Spannelementes versehen ist. Die mehreren Lagereinrichtungen sind vorzugsweise in Längsachse des Filter- oder Reaktoreinsatzes beabstandet zueinander angeordnet, um die Welle an mehreren Stellen über der Länge des Filter- oder Reaktoreinsatzes lagern zu können. Jede Lagereinrichtung weist ein Spannelement auf, mit welchem sie über ihr zumindest eines Stützelement im Inneren eines Rohres verspannbar ist. Um die einzelnen Lagereinrichtungen von außen bzw. einem Stirnende des Rohres her betätigen zu können, ist jede Lagereinrichtung vorzugsweise mit einem Betätigungselement zur Betätigung des zu dieser Lagereinrichtung gehörenden Spannelementes versehen. Dabei weist vorzugsweise jede Lagereinrichtung ein separates Betätigungselement auf, so dass die einzelnen Lagereinrichtungen unabhängig voneinander gespannt werden können. Es ist jedoch auch denkbar, die Betätigungselemente so miteinander zu koppeln, dass die Spannelemente mehrerer Lagereinrichtungen gleichzeitig bedient werden können und so diese mehreren Lagereinrichtungen gleichzeitig in dem Rohr verspannt werden können.

Gemäß einer bevorzugten Ausführungsform der Erfindung ist das Stützelement als Stützring ausgebildet und zumindest ein Spannelement an oder in dem Stützring derart angeordnet, dass über das Spannelement der Umfang des Stützringes veränderbar ist. Dadurch kann der Stützring wie oben beschrieben, gegen die Innenwandung des Rohres gepresst werden. In dem Fall, dass zwischen dem Stützring und dem Lager mehrere Verbindungselemente, beispielsweise Speichen angeordnet sind, ist es besonders bevorzugt, dass immer zwischen zwei Speichen jeweils ein Spannelement in dem Stützring angeordnet ist. Auf diese Weise kann die Vergrößerung oder Verkleinerung des Umfanges des Stützringes in jedem der zwischen den einzelnen Speichen gelegenen Segmente gleichmäßig erfolgen, so dass eine Zentrierung des Lagers beibehalten werden kann.

Besonders bevorzugt weist das zumindest eine Spannelement zumindest zwei Keilelemente mit schräg zur Umfangsrichtung des Stützringes und vorzugsweise schräg zur Axialrichtung des Filter- oder Reaktoreinsatzes gerichteten, aneinander anliegenden Keilflächen auf, wobei die Keilelemente zum Spannen quer zur Umfangsrichtung, vorzugsweise mittels einer Stellschraube aufeinander zu bewegbar sind. Wenn die beiden Keilelemente über die Stellschraube auf einander zu bewegt werden, gleiten die beiden aneinander anliegenden Keilflächen aufeinander ab, so dass die Keilelemente je nach Drehrichtung der Schraube in Umfangsrichtung des Stützringes auseinander oder aufeinander zu bewegt werden, so dass die Umfangslänge des Stützringes über die Keilelemente variiert werden kann.

Weiter bevorzugt weist das zumindest eine Spannelement ein Federelement auf, durch welches mittels Federkraft das Stützelement in dem Rohr verspannbar ist. Durch dieses Federelement kann ein selbsttätiges Verspannen des Stützelementes in dem Rohr erreicht werden. Vorzugsweise werden Betätigungselemente vorgesehen, durch welche die Federelemente in einer vorgespannten Stellung, in welcher die Stützelemente nicht verspannt sind, gehalten werden können, um die Lagereinrichtung mit dem Filter- oder Reaktoreinsatz in das Rohr einsetzen oder aus dem Rohr entnehmen zu können. Durch Lösen dieser Betätigungselemente können die Federelemente dann freigegeben werden, so dass sie eine Spannkraft erzeugen, welche beispielsweise auf die Stützelemente wirkt und diese so in dem Rohr verspannt.

Besonders bevorzugt kann beispielsweise ein Stützelement in Form eines Stützringes vorgesehen sein, welcher als Federring derart ausgebildet ist, dass er durch die Federkraft bestrebt ist, seine maximale Umfangslänge anzunehmen und so nach Einsetzen in ein Rohr gegen dessen Innenwandung gepresst wird. Alternativ kann auch um die Außenseite des Rohres zum Verspannen ein Federring gelegt werden, welcher derart vorgespannt ist, dass er durch die Federkraft in seiner Stellung mit dem kleinsten Innendurchmesser gehalten wird.

Gemäß einer weiteren bevorzugen Ausführungsform kann das zumindest eine Spannelement als hydraulisches oder pneumatisches Spannelement ausgebildet sein. So können beispielsweise an den Stützelementen Kissen oder an einem ringförmigen Stützelement ein ringförmiger Schlauch angeordnet sein, welcher mit Luft oder einer Hydraulikflüssigkeit füllbar und auf diese Weise expandierbar ist, um das Stützelement im Inneren eines Rohres verspannen zu können. Auch andere Ausgestaltungen sind denkbar. Insbesondere eignet sich die hydraulische Ausgestaltung des Spannelementes, um ein selbsttätiges Spannen zu erreichen, da das durch den Filter- oder Reaktoreinsatz fließende Fluid genutzt werden kann, um den erforderlichen Druck zum Spannen aufzubauen.

Weiter bevorzugt sind am Außenumfang des Filter- oder Reaktoreinsatzes sich in axialer Richtung erstreckende Führungsschienen angeordnet, welche vorzugsweise mehrere axial beanstandete Stützelemente miteinander verbinden. Diese Führungsschienen erleichtern es, den Filter- oder Reaktoreinsatz in ein Rohr einzuschieben, da die Führungsschienen an der Innenwandung des Rohres gleiten können. Die Führungsschienen sind radial weiter außen gelegen, so dass sie die radial weiter innen gelegenen Filter- oder Reaktorelemente vor Beschädigungen beim Einsetzen oder Herausziehen des Filter- oder Reaktoreinsatzes schützen. Gleichzeitig können die Führungsschienen die Stützelemente der einzelnen Lagereinrichtungen miteinander verbinden, so dass hier insgesamt eine größere Stabilität erreicht wird. Es wird im Wesentlichen ein Käfig gebildet, welcher die Filterelemente bzw. Reaktorelemente am Außenumfang des Filtereinsatzes umgibt.

Die Welle des Filter- oder Reaktoreinsatzes ist vorzugsweise in mehrere Abschnitte mit jeweils zumindest einem daran angeordnetem Filter- oder Reaktorelement unterteilt, wobei die Abschnitte über Wellenkupplungen, vorzugsweise lösbar, miteinander verbunden sind und die Welle im Bereich einer Wellenkupplung, vorzugsweise aller Wellenkupplungen, in dem Lager einer Lagereinrichtung gelagert ist. Über die Wellenkupplungen ist es möglich, den gesamten Filter- oder Reaktoreinsatz in mehrere Abschnitte einzuteilen, welche modulartig zusammengefügt werden können, beispielsweise um Filter- oder Reaktoreinsätze unterschiedlicher Länge bilden zu können. Insbesondere auch um Fluchtungsfehler ausgleichen zu können, ist es dabei vorteilhaft, die Lagereinrichtungen im Bereich der Wellenkupplungen anzuordnen. Darüber hinaus ist in diesen Abschnitten der Welle der erforderliche Raum vorhanden, um eine Lagereinrichtung anordnen zu können, da in diesen Bereich üblicherweise kein Filter- oder Reaktorelement angeordnet wird. Die Wellenkupplungen sind bevorzugt als homokinetische Glieder bzw. Gelenke ausgebildet.

Die Wellenkupplungen sind bevorzugt derart ausgebildet, dass sie einen mit einem ersten Abschnitt der Welle verbundenen äußeren Kupplungsteil und einen mit einem angrenzenden zweiten Abschnitt der Welle verbundenen inneren Kupplungsteil, welcher in den äußeren Kupplungsteil eingreift, aufweisen, wobei der innere Kupplungsteil an seinem Außenumfang einen im Querschnitt konvexen Anlagering aufweist, an welchem der äußere Kupplungsteil mit seinem Innenumfang anliegt. Dabei liegt der äußere Kupplungsteil mit seinem Innenumfang im Wesentlichen an der Scheitellinie des konvexen Anlagerings an. Der konvexe Anlagering dient vorzugsweise der Abdichtung, was dann wichtig ist, wenn die Welle als Hohlwelle ausgebildet ist, so dass durch die Welle ein Fluid, welches in die Filterscheiben eingetreten ist und durch die Filterscheiben geflossen ist, abgeführt werden kann. Die radial nach außen gerichtete konvexe Form des Anlagerings hat den Vorteil, dass Winkelfehler zwischen den aneinander angrenzenden Abschnitten der Welle ausgeglichen werden können. Dies ist insbesondere dann von Vorteil, wenn das Rohr, in welchem der Filter- oder Reaktoreinsatz angeordnet wird, ein Kunststoffrohr ist, welches nur eine begrenzte Steifigkeit aufweist, so dass bei mehreren Lagerungen der Welle eine genau fluchtende gerade Ausrichtung über die gesamte Länge des Filter- oder Reaktoreinsatzes schwer möglich ist.

Besonders bevorzugt ist in axialer Richtung des Filter- oder Reaktoreinsatzes gesehen im Bereich des konvexen Anlageringes das Lager der zumindest einen Lagereinrichtung angeordnet. Dies ist zum Ausgleich von Winkelfehlern zwischen den angrenzenden Wellenabschnitten von besonderem Vorteil, da sich die Wellenabschnitte im Bereich des Lagers gewinkelt zueinander drehen bzw. ausrichten können und das Lager davon unbeeinträchtigt bleibt.

Weiter bevorzugt ist in axialer Richtung vor und/oder hinter dem Anlagering zwischen dem inneren und dem äußeren Kupplungsteil ein Dichtungsring angeordnet. Derartige Dichtungsringe können zum einen auch zur Abdichtung des Innenraumes in einer Hohlwelle im Bereich der Wellenkupplungen dienen. Ferner können diese Dichtungen dazu dienen, eine Anlagefläche zwischen zwei einander angreifenden Kupplungsteilen vor Verunreinigungen zu schützen, was insbesondere deshalb bevorzugt ist, da die Filter- oder Reaktoreinrichtung zur Abwasserreinigung eingesetzt werden soll.

Die Wellenkupplung weist im Übrigen vorzugsweise mechanische Eingriffsmittel auf, welche eine Drehmomentübertragung zwischen zwei aneinander angrenzenden Wellenabschnitten ermöglichen. Diese können insbesondere eine Klauenkupplung sein, innerhalb derer vorzugsweise elastische Elemente angeordnet sind, welche zum einen für eine Dämpfung sorgen und zum anderen Ausrichtungsfehler zwischen den aneinander angrenzenden Wellenabschnitten in der Wellenkupplung ausgleichen können.

Die Erfindung betrifft ferner eine Filter- oder Reaktorvorrichtung, welche ein Rohr aufweist, welches als Gehäuse der Filter- oder Reaktorvorrichtung dient. In diesem Gehäuse ist ein Filter- oder Reaktoreinsatz gemäß der vorangehenden Beschreibung eingesetzt. Dabei ist der Filter- oder Reaktoreinsatz vorzugsweise aus dem Rohr entnehmbar, beispielsweise zu Reinigungs- und Wartungszwecken.

Nachfolgend wird die Erfindung beispielhaft anhand der beigefügten Figuren beschrieben. In diesen zeigt:
- Fig. 1: eine perspektivische Ansicht eines erfindungsgemäßen Filtereinsatzes,
- Fig. 2: eine Schnittansicht eines Filtereinsatzes gemäß Fig. 1 in Richtung seiner Längsachse X,
- Fig. 3: eine perspektivische Ansicht dreier Lagereinrichtungen des Filtereinsatzes gemäß Fig. 1 und 2,
- Fig. 4: eine perspektivische Detailansicht einer Lagereinrichtung gemäß Fig. 4,
- Fig. 5: eine Detailansicht eines Spannelementes
- Fig. 6 und 7: Detailansichten einer zweiten Ausführungsform eines Spannelementes, wobei Fig. 6 den gelösten und Fig. 7 den gespannten Zustand zeigt,
- Fig. 8: eine Lagereinrichtung gemäß einer zweiten Ausführungsform der Erfindung,
- Fig. 9: eine Lagereinrichtung gemäß einer weiteren Ausführungsform der Erfindung,
- Fig. 10: eine perspektivische Ansicht einer weiteren Ausführungsform einer Lagereinrichtung mit hydraulischem Spannelement
- Fig. 11: eine Schnittansicht der Lagereinrichtung gemäß Figur 10,
- Fig. 12: eine Draufsicht auf eine Lagereinrichtung mit drei beweglichen Speichen,
- Fig. 13: eine Schnittansicht einer Wellenkupplung im Inneren einer Lagereinrichtung,
- Fig. 14: eine Detailansicht der Wellenkupplung gemäß Fig. 13 und
- Fig. 15: eine perspektivische Ansicht einer Wellenkupplung.

Nachfolgend wird die Erfindung beispielhaft anhand eines Filtereinsatzes beschrieben. Es ist jedoch zu verstehen, dass die nachfolgend beschriebenen Merkmale genauso bei einem Reaktoreinsatz zur Anwendung kommen können. Der einzige Unterschied besteht darin, dass die Filterelemente in Form von Filterscheiben 2 dann als Reaktorelemente in Form von Reaktorscheiben ausgebildet sind. Die Filterscheiben sind, wie nachfolgend näher beschrieben wird, porös und das zu filternde Fluid dringt in die Filterscheiben ein. Die Reaktorscheiben tragen an ihrer Oberfläche für die Filterung bzw. Wasserreinigung wesentliche Komponenten, beispielsweise Bakterienkulturen.

Wenn nachfolgend von Filtereinsatz, Filterelement, Filterscheibe oder Filtervorrichtung die Rede ist, so ist zu verstehen, dass dies im Sinne der Erfindung auch gleichbedeutend mit Reaktoreinsatz, Reaktorelement, Reaktorscheibe oder Reaktorvorrichtung ist.

Der erfindungsgemäße Filtereinsatz weist eine Vielzahl von parallel hintereinanderliegend angeordneten Filterscheiben 2 auf, welche drehfest an einer drehbaren Welle 4 angeordnet sind. Dabei ist der Filtereinsatz im gezeigten Beispiel in drei Abschnitte oder Module 6, 8 und 10 unterteilt. Jedes Modul 6, 8, 10 weist eine Mehrzahl von beabstandet zueinander angeordneten kreisförmigen Filterscheiben 2 auf, im vorliegenden Beispiel jeweils fünfzehn, jedoch sind auch andere Anzahlen denkbar. Jedes Modul weist einen Wellenabschnitt 4a oder 4b oder 4c auf, welche gemeinsam die Welle 4 bilden und an Wellenkupplungen 12 drehfest miteinander gekuppelt sind. Die Welle 4 ist durch einen Antriebsmotor 14 über ein nicht näher gezeigtes Winkelgetriebe drehbar. Ferner ist die Welle 4, bestehend aus den Wellenabschnitten 4a, 4b und 4c, als Hohlwelle ausgebildet. Die Filterscheiben 2 sind porös ausgebildet und derart mit der Welle 4 verbunden, dass ein Fluiddurchgang vom Inneren der Filterscheiben 2 zum Inneren der Hohlwelle 4 besteht. So kann Fluid aus dem die Filterscheiben 2 umgebenden Raum in die Filterscheiben eindringen und im Inneren der Filterscheiben zu der Welle und von dort in die Welle 4 strömen. An dem den Motor 14 abgewandten Ende 16 kann das gefilterte Fluid dann abgeführt werden.

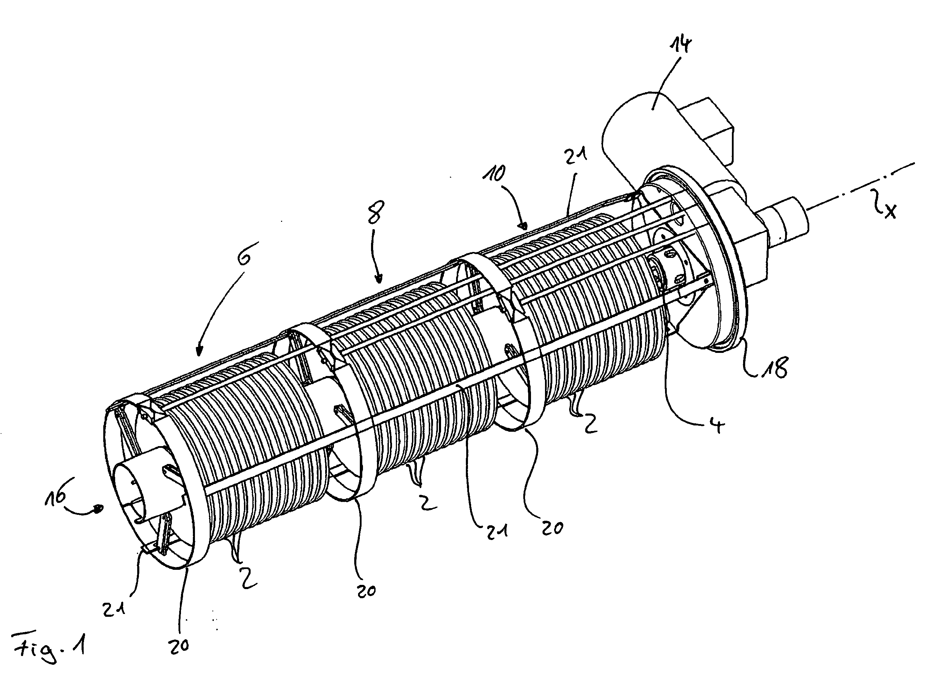

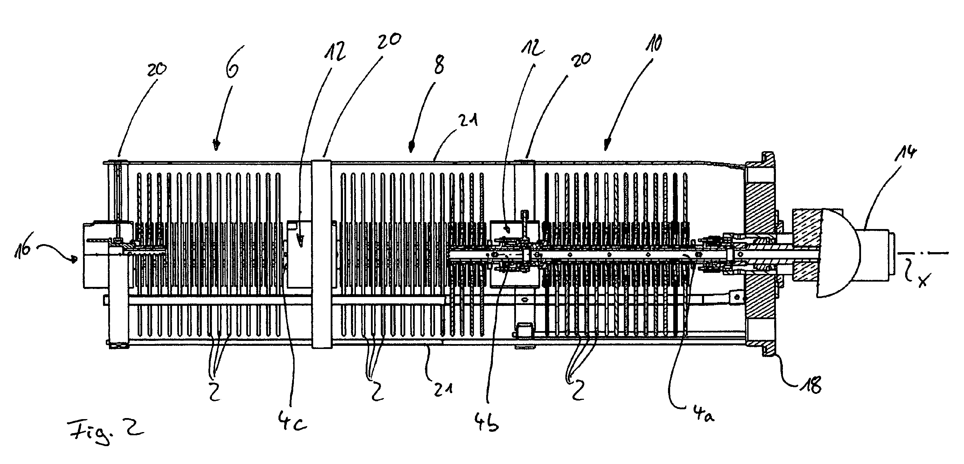

Der in Figuren 1 und 2 gezeigte Filtereinsatz wird in ein Rohr, welches das Gehäuse der Filtervorrichtung bildet, von einer Öffnung des Rohres her eingeschoben, so dass diese Öffnung dann durch den Deckel 18 am Filtereinsatz verschlossen wird.

Zur Führung und Fixierung im Inneren des Rohres weist der erfindungsgemäße Filtereinsatz neben dem Deckel 18 drei Lagereinrichtungen 20 auf. Diese sind zwischen den Modulen 6, 8, 10 bzw. an deren Enden angeordnet. Dabei sind die Lagereinrichtungen 20 in Richtung der Längsachse X gesehen an denselben Axialpositionen wie die Wellenkupplungen 12 angeordnet. In Längsrichtung X sind die Lagereinrichtungen 20 am Außenumfang über sich parallel zur Längsachse X erstreckende Führungsschienen 21 miteinander verbunden. Die Führungsschienen 21 verbinden die Stützringe 22 der Lagerelemente 20 und erstrecken sich im Wesentlichen in einer Umfangsfläche mit diesen, so dass ein die Filterelemente 2 umgebender Käfig gebildet wird. Die Führungsschienen 21 (im gezeigten Beispiel drei) sind vorzugsweise gleichmäßig über den Umfang des Filtereinsatzes verteilt angeordnet. Die Führungsschienen 21 dienen zur Führung beim Einschieben des Filtereinsatzes in ein Rohr und schützen die radial weiter innen liegenden Filterelemente 2.

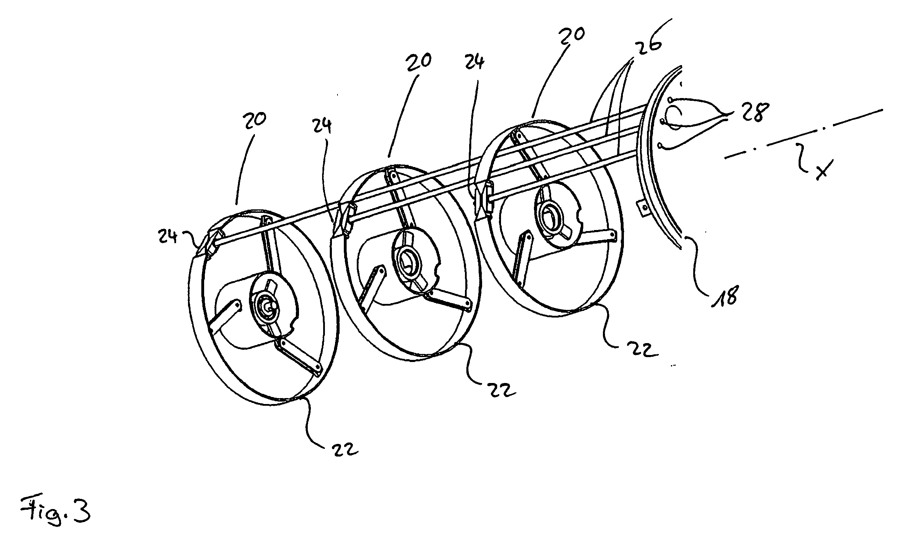

Die Lagereinrichtungen 20 dienen zur Lagerung der Welle 4 im Inneren des in Figuren 1 und 2 nicht gezeigten Gehäuses bzw. Rohres. Die Lagereinrichtungen 20 sind ohne die Module 6, 8 und 10 sowie die Welle 4 in Figur 3 dargestellt. Die Lagereinrichtungen 20 weisen jeweils ein Stützelement in Form eines Stützringes 22 auf, welches ausgebildet ist, um am Innenumfang des Rohres, in welches der Filtereinsatz eingeschoben wird, zur Anlage zu kommen. Jeder Stützring weist ein Spannelement 24 auf, welches über ein Betätigungselement in Form einer Betätigungsstange 26 betätigbar ist. Die Betätigungsstangen 26 erstrecken sich jeweils ausgehend von dem Spannelement 24 in axialer Richtung parallel zur Längsachse X im Bereich des Außenumfangs des Filtereinsatzes zu dem Deckel 18. Dort sind sie zum einen geführt und gelagert und zum anderen über Eingriffselemente 28, welche an den axialen Enden der Betätigungsstangen 26 ausgebildet sind, beispielsweise mit einem Schraubenschlüssel drehbar.

Die Spannelemente 24 sind so ausgebildet, dass über sie die Länge des Stützringes 22 in seiner Umfangsrichtung verändert werden kann. Durch Vergrößern der Umfangslänge des Stützringes 22 kann dieser gegen die Innenwandung eines den Filtereinsatz aufnehmenden Rohres gepresst werden und so im Inneren des Rohres verspannt und kraftschlüssig fixiert werden, um Lagerkräfte in radialer und ggf. auch in Umfangs- und/oder Axialrichtung auf das Rohr übertragen zu können.

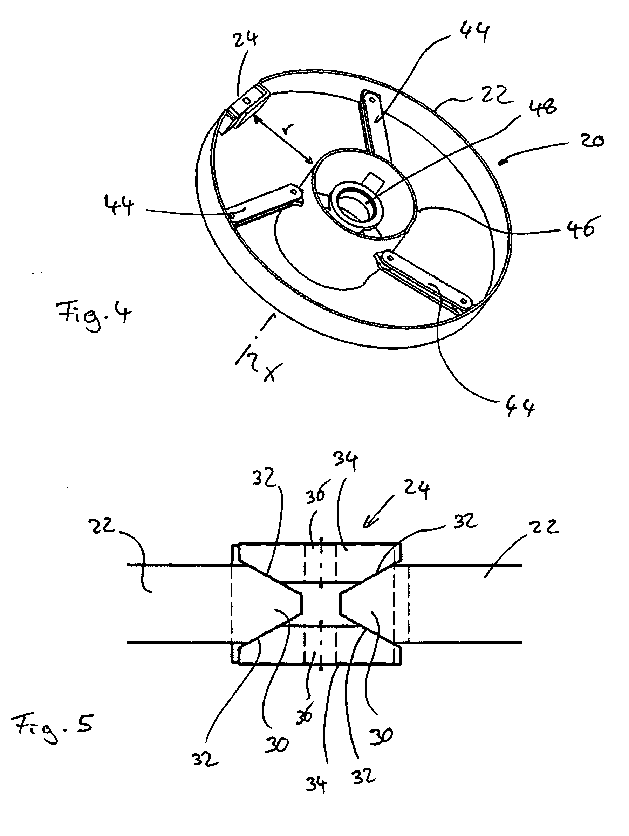

Der beispielhafte Aufbau von Spannelementen 24 ist in den Figuren 5 bis 7 gezeigt. Figur 5 zeigt eine erste Ausführungsform, bei welcher der Stützring 22 an der Stelle des Spannelementes 24 unterbrochen ist. Die beiden einander zugewandten Enden des Stützringes 22 sind keilförmig als Keilelemente 30 ausgebildet, wobei Sie jeweils zwei Keilflächen 32 aufweisen, welche sich zu den Enden des Stützringes 22 aufeinander zu erstrecken. Zwischen diesen Keilelementen 30 sind zwei weitere Keilelemente 34 angeordnet, die korrespondierende Keilflächen aufweisen, welche mit den Keilflächen, 32 in Anlage sind. Die beiden Keilelemente 34 sind einander gegenüberliegend und mit einer Gewindebohrung 36 versehen, welche sich in einer Richtung quer zur Umfangsrichtung parallel zur Längsachse des Filtereinsatzes erstreckt. In diese Gewindebohrung 36 kann eine Betätigungsstange 26 mit einem korrespondierenden Gewinde eingreifen. Dabei ist vorzugsweise ein Gewinde nur in einer der Bohrungen 36 ausgebildet und die Betätigungsstange 26 an dam anderen Keilelement 24 lediglich in axialer Richtung fixiert. Alternativ können in den Bohrungen 36 gegenläufige Gewinde ausgebildet sein. Hierdurch wird erreicht, dass durch Drehen der Betätigungsstange 26 die beiden Keilelemente 24 aufeinander zu bewegt werden können, so dass sich an ihren beiden in Umfangsrichtung abgewandten Enden die mit den Keilflächen 32 in Anlage befindlichen Flächen aufeinander zu bewegen. Dadurch werden die Keilelemente 30 in Umfangsrichtung auseinander gedrückt. Wird die Betätigungsstange 26 in entgegengesetzter Richtung gedreht, bewegen sich die Keilelemente 34 wieder auseinander, so dass die Keilelemente 30 wieder einander angenähert werden können, wobei sie in Kontakt mit den Keilelementen 34 verbleiben können. Hierzu kann der Stützring 22 derart vorgespannt sein, dass er selbsttätig in eine Lage mit kleinerem Umfang strebt.

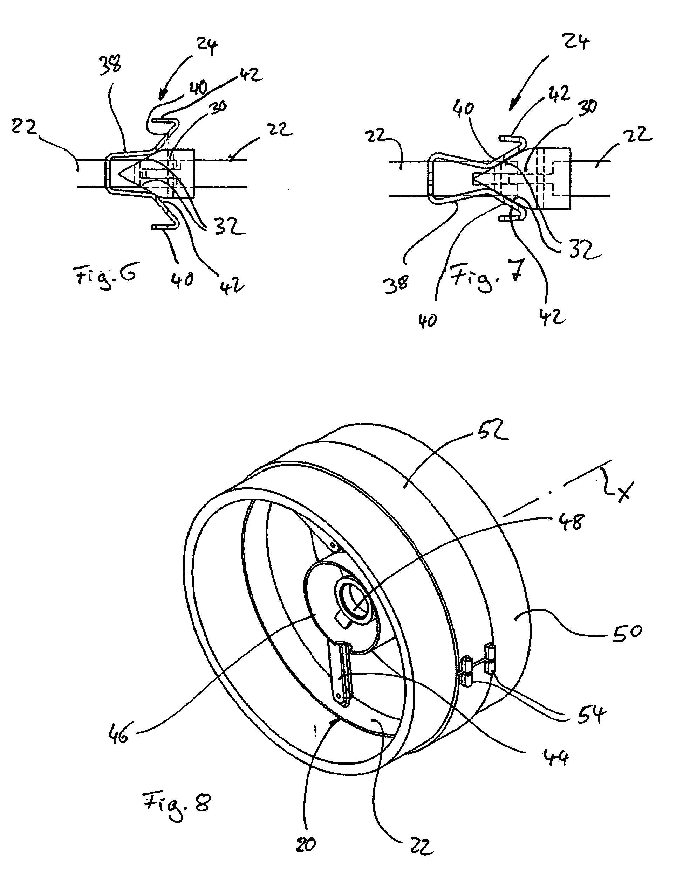

Eine alternative Ausgestaltung eines Spannelementes 24 ist in Figuren 6 und 7 gezeigt. Hier ist nur an einem der Enden des aufgetrennten Stützringes 22 ein Keilelement 30 angeordnet. Am gegenüberliegenden Ende des aufgetrennten Stützringes 32 ist eine Klammer 38 angeordnet bzw. ausgebildet, welche zwei v-förmig zueinander angeordnete Schenkel 40 aufweist, welche Keilflächen bilden, die mit den Keilflächen 32 des Keilelementes 30 in Anlage sind. Die Schenkel 40 sind ebenfalls mit Bohrungen entsprechend den Bohrungen 36 in Fig. 5 versehen, wobei, wie oben beschrieben, in einem der Schenkel 40 ein Gewinde oder aber in beiden Schenkeln gegenläufige Gewinde ausgebildet sein können. In die Bohrung 42 kann eine Betätigungsstange 36 mit ihrem Gewinde eingreifen, so dass durch Drehen der Betätigungsstange (in Figuren 6 und 7 nicht gezeigt) die beiden Schenkel 40 aufeinander zu bewegt werden können, wie in Fig. 7 gezeigt. Dabei drücken die von den Schenkeln 40 gebildeten Keilflächen gegen die Keilflächen 32 an dem Keilelement 30 und drücken so die gegenüberliegenden Enden des Stützringes 22 auseinander, so dass dieser in Umfangsrichtung vergrößert wird und auf diese Weise am Innenumfang eines Rohres verspannt werden kann.

Die Betätigung der Spannelemente 24 mittels der Betätigungsstangen 26 hat den Vorteil, dass nach dem Einsetzen des Filtereinsatzes in ein Rohr die Lagereinrichtungen 20 bequem von außen, d. h. dem Axialende des Rohres, an dem der Deckel 18 gelegen ist, verspannt werden können, um in dem Rohr fixiert zu werden. Zum Entnehmen des Filtereinsatzes aus dem Rohr können die Spannelemente 24 der Lagereinrichtungen 20 durch Drehen der Betätigungsstange 26 in umgekehrter Richtung wieder gelöst werden.

Wie besonders deutlich in Fig. 4 zu erkennen ist, ist der Stützring 22 jeder Lagereinrichtung 20 im gezeigten Beispiel über drei Speichen 44 mit einem zentral angeordneten Lager bestehend aus einem Lagerträger 46 und dem darin angeordneten eigentlichen Lager 48 verbunden. Das Lager 48 ist im gezeigten Beispiel als Gleitlager ausgebildet und dient der Lagerung der Welle 4. Das Lager 48 ist in dem Lagerträger 46 über starre Speichen 49 zentrisch fixiert. Die Speichen 44 halten den Stützring 22 beabstandet zu dem Lagerträger 48, so dass zwischen diesen beiden Bauteilen ein Freiraum verbleibt, durch welchen Fluid strömen kann. Die Speichen 44 halten dabei den Lagerträger 46 zentriert in dem Stützring 22. Durch Verstellen des Spannelementes 24, welches im gezeigten Beispiel nur zwischen zwei Speichen 44 im Stützring 22 angeordnet ist, kann es zu einem leichten Versatz aus dem Zentrum kommen, welcher jedoch durch die Speichen 44 ausgeglichen werden kann. Im gezeigten Beispiel ist lediglich ein Spannelement 24 angeordnet, es ist jedoch auch denkbar, drei Spannelemente 24 vorzusehen, von denen jeweils eins zwischen zwei benachbarten Speichen 44 angeordnet ist.

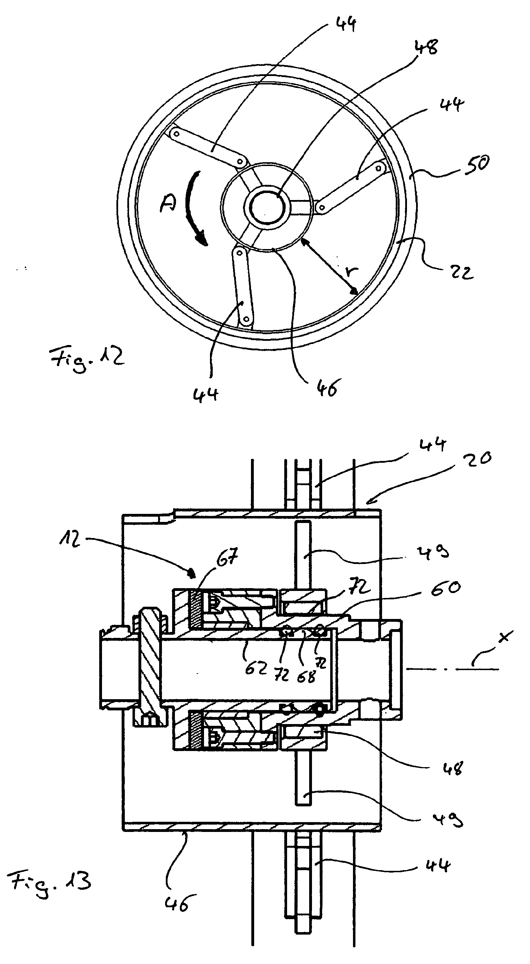

Die Speichen 44 sind sowohl an dem Stützring 22 als auch an dem Lagerträger 46 drehbar angelenkt, wobei die Dreh- bzw. Schwenkachsen dieser Anlenkungspunkte parallel zur Längsachse X verlaufen. Ferner sind die Speichen 44 länger als der radiale Abstand zwischen Außenumfang des Lagerträgers 46 und dem Innenumfang des Stützringes 22. Auf diese Weise kann eine Änderung des radialen Abstandes r zwischen dem Stützring 22 und dem Lagerträger 46 durch Verschenken der Speichen 44 ausgeglichen werden, wie anhand von Fig. 12 gezeigt ist. Dadurch, dass die Speichen 44 länger als der radiale Abstand r sind, erstrecken sich die Speichen 44 in ihrer Ruhelage, welche dem entspannten Zustand des Stützringes 22 entspricht, in einem Winkel zum Radius r. Wenn nun der Lagerträger 46 und der Stützring 22 relativ zueinander verdreht werden, wie in Fig. 12 durch Pfeil A für die Drehung des Lagerträgers 46 angedeutet, werden die Speichen 44 näher zu dem Radius bzw. der Radiuslinie in Richtung des radialen Abstandes r verschwenkt, d. h. die äußeren Anlenkungspunkte und/oder die inneren Anlenkungspunkte der Speichen 44 nähern sich dieser Radiuslinie weiter an. Dadurch wird der radiale Abstand zwischen den Anlenkungspunkten größer, und es kann durch die Speichen 44 eine Änderung des radialen Abstandes r ausgeglichen werden. Gleichzeitig wird die Zentrierung des Lagers 48 beibehalten, da die Speichen 44 gleichmäßig verschwenken.

Diese Funktion der Zentrierung des Lagers 48 über die Speichen 44 kann auch zum Verspannen des Stützringes 22 in dem Rohr 50 selber verwendet werden. Wenn der Stützring 22 entsprechend elastisch oder dehnbar in Umfangsrichtung ausgebildet ist, kann ein Verdrehen des Lagerträgers 46 relativ zu dem Stützring 22 dazu dienen, dass die Speichen 44 mehr in ihre gestreckte, d. h. sich in Richtung des radialen Abstandes r erstreckende Position gelangen, wodurch ihre Anlenkungspunkte weiter voneinander beabstandet werden und der Stützring 22 radial nach außen gedrückt wird. Ein Verspannen in dieser Weise könnte beispielsweise auch dadurch erfolgen, dass der Lagerträger 46 um ein gewisses Maß durch die eingesetzte Welle 4 mitgedreht wird, so dass ein selbsttätiges Verspannen und eine selbsttätige Zentrierung des Lagers 48 im Inneren des Rohres 50 stattfindet.

In den gezeigten Beispielen sind die Speichen 44 über Stifte schwenkbar an dem Lagerträger 46 und dem Stützring 22 angelenkt. Dies könnte auch durch elastische Ausgestaltung, beispielsweise durch Materialausdünnungen im Bereich der Anlenkungspunkte, insbesondere bei Ausbildung des Lagerträgers 46, des Stützringes 22 und der Speichen 44 aus Kunststoff erreicht werden. Alternativ können sich die Speichen 44 auch immer in radialer Richtung erstrecken und in dieser Richtung in ihrer Länge veränderbar, insbesondere federnd ausgebildet sein.

Fig. 8 zeigt eine weitere Möglichkeit, wie die Lagereinrichtung 20 in dem Rohr 50 verspannt werden kann. Die Lagereinrichtung 20 entspricht der zuvor beschriebenen Lagereinrichtung 20, bis auf dass in dem Stützring 22 kein Spannelement 24 vorgesehen ist. Bei dieser Ausführungsform erfolgt das Spannen von außen, indem außen um das Rohr 50 ein Spannring 52 gelegt wird, so dass er das Rohr 50 umfänglich umgibt. Der Spannring 52 kann über Spannschrauben 54 oder andere geeignete Spannelemente in seiner Umfangslänge so verkürzt werden, dass er umfänglich gegen die Außenseite des Rohres 50 gepresst wird. Wenn das Rohr 50 flexibel, beispielsweise aus Kunststoff ausgebildet ist, kann dabei das Rohr 50 unter dem Spannring 52 gegen die Außenseite bzw. den Außenumfang des Stützringes 22 gepresst werden, so dass der Stützring 22 der Lagereinrichtung 20 ähnlich der zuvor beschriebenen Weise kraftschlüssig im Inneren des Rohres so fixiert wird. Im gezeigten Beispiel ist dazu der Spannring 52 in etwa an derselben axialen Position in Richtung der Längsachse X wie der Stützring 22 angeordnet. Es ist jedoch auch denkbar, Spannringe 52 jeweils zwischen zwei Stützringen 22 vorzusehen.

In dem in Fig. 8 gezeigten Beispiel sind bei der Lagereinrichtung 20 die Speichen 44 ebenfalls in der zuvor beschriebenen Weise schwenkbar an dem Lagerträger 46 und dem Stützring 22 angeordnet. Dies hat den Vorteil, dass eine Zentrierung des Lagerträgers 46 mit dem Lager 48 im Inneren des Rohres bzw. im Inneren des Stützringes 22 möglich ist. Dies ist insbesondere dann von Vorteil, wenn ein nicht sehr steifes Kunststoffrohr 50 verwendet wird, welches sich über seine Länge, d. h. die axiale Länge des Filtereinsatzes verbiegen oder verformen kann. Dann müssen Winkel- bzw. Fluchtungsfehler zwischen den einzelnen Lagern 48 der mehreren Lagereinrichtungen 20 ausgeglichen werden können.

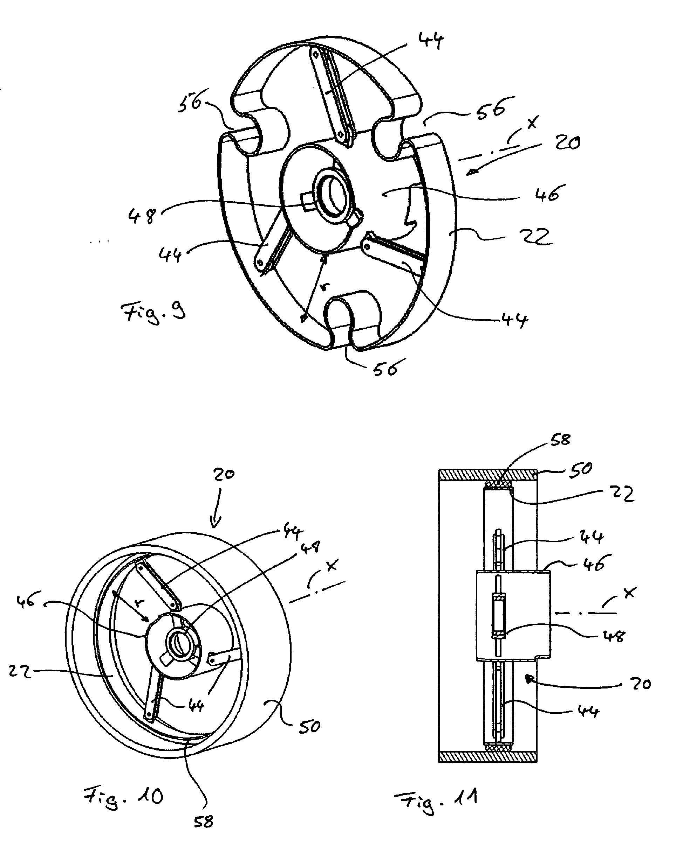

Fig. 9 zeigt eine weitere Ausführungsform einer erfindungsgemäßen Lagereinrichtung. Diese unterscheidet sich von den vorangehend beschriebenen dadurch, dass drei Spannelemente 56 über den Umfang des Stützringes 22 verteilt ausgebildet sind, so dass jeweils ein Spannelement 56 zwischen zwei Speichen 44 angeordnet ist. Die Speichen 44 sind in der zuvor beschriebenen Weise ausgebildet und angelenkt. Die Spannelemente 56 sind durch Ω-förmige Ausstülpungen des Stützringes 22 ausgebildet, welche sich radial nach innen erstrecken. Bei geeigneter Materialwahl des Stützringes 22 wird auf diese Weise im Bereich der Spannelemente 56 eine Federwirkung erzielt, welche es ermöglicht, die Bereiche des Stützringes 22 zwischen den Spannelementen 56 radial nach innen zu drücken, so dass die Umfangslänge des Spannringes 22 verkürzt wird und dieser in ein Rohr 50 eingesetzt werden kann. Wird der Druck nach innen auf die Bereiche des Spannringes 22 zwischen den Spannelementen 56 wieder gelöst, wirkt deren Federwirkung so, dass die Bereiche des Stützringes 22 zwischen den Spannelementen 56 radial nach außen gegen die Innenwandung des Rohres 50 gedrückt werden und so die Lagereinrichtung 20 in der beschriebenen Weise in dem Rohr verspannen.

Eine weitere Möglichkeit, den Stützring 22 im Inneren des Rohres 50 zu verspannen, ist in Fig. 10 und 11 gezeigt. Hier ist eine hydraulische Spanneinrichtung 58 vorgesehen. Die hydraulische Spanneinrichtung 58 ist ein ringförmiger Schlauch bzw. ein ringförmiges Kissen, welches sich um den Außenumfang des Stützringes 22 erstreckt und mit der Innenwandung des Rohres 50 zur Anlage kommt. Durch Füllen dieses Schlauches bzw. Kissens mit Hydraulikfluid oder Druckluft wird der Durchmesser dieses Schlauches bzw. Kissens 58 vergrößert und eine Druckkraft zwischen dem Stützring 22 und der Innenwandung des Rohres 50 in radialer Richtung r erzeugt. Auf diese Weise wird der Stützring 50 bzw. die gesamte Lagereinrichtung 20 im Inneren des Rohres 50 lösbar verspannt. Alle übrigen Elemente der Lagereinrichtung 20, insbesondere Ausgestaltung und Anordnung der Speichen 44 entspricht der vorangehend beschriebenen Ausgestaltung.

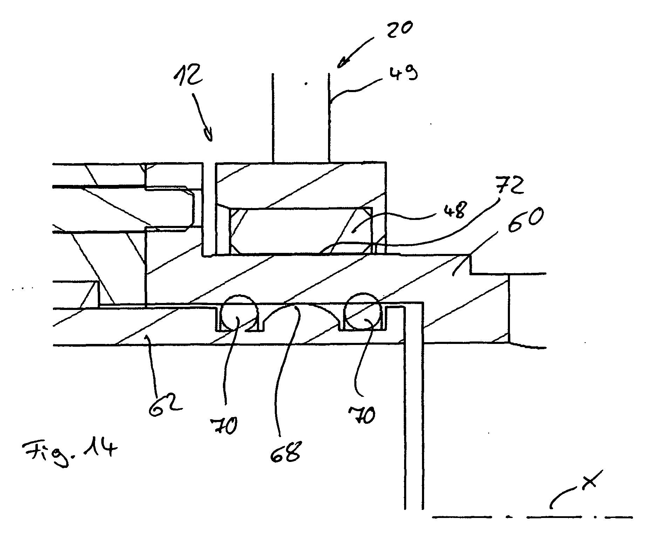

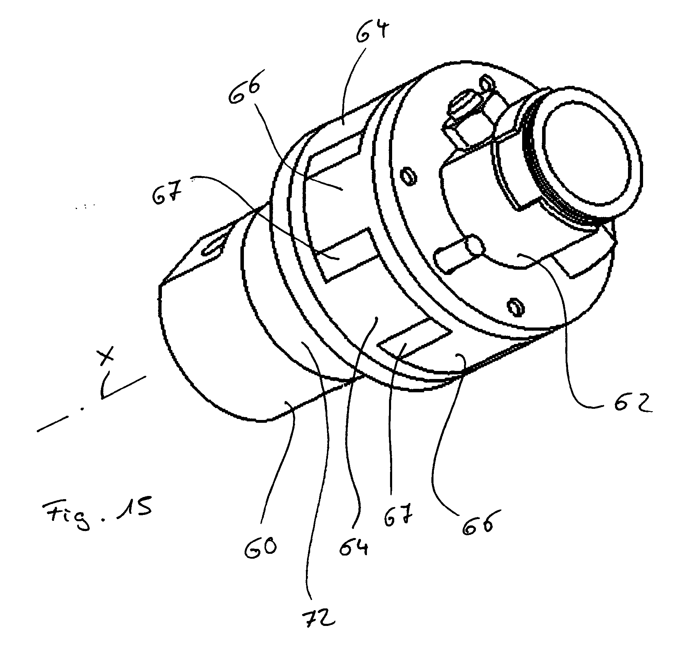

Die Wellenabschnitte 4a, 4b und 4c sind über Wellenkupplungen 12 miteinander verbunden, wie sie beispielhaft in Fig. 13 - 15 dargestellt sind. Die Wellenkupplung 12 befindet sich genau an der Stelle des Lagers 48 der Lagereinrichtung 20 in Richtung der Längsachse X. Jede Wellenkupplung 12 besteht aus einem äußeren Kupplungsteil 60 und einem inneren Kupplungsteils 62, von denen jeweils eines mit einem Axialende eines Wellenabschnittes 4a, 4b oder 4c verbunden ist. Beispielsweise ist der äußere Kupplungsteil 60 mit einem Ende des Wellenabschnittes 4a und der innere Kupplungsteil 62 mit dem angrenzenden Ende des Abschnittes 4b verbunden. Wie die Welle 4 selber sind auch das äußere Kupplungsteil 60 und das innere Kupplungsteil 62 rohrförmig, d. h. als Hohlwelle ausgebildet, so dass ein durchgehender Fluiddurchgang durch die gesamte Welle 4 gewährleistet ist. Das äußere Kupplungsteil 60 und das innere Kupplungsteil 62 sind zum einen wie in Fig. 13 und 15 gezeigt radial außen über Klauen 64 und 66 formschlüssig miteinander in Eingriff, so dass eine Drehmomentübertragung von dem einen Kupplungsteil 60 auf das andere Kupplungsteil 62 und/oder umgekehrt möglich ist. Zwischen den Klauen 64 und 66 können Elastomerelemente 67 angeordnet sein, um zum einen eine Dämpfung zu erzielen und zum anderen einen Versatz zwischen den Wellenabschnitten 4a, 4b und/oder 4c in radialer Richtung auszugleichen.

Ferner sind das innere Kupplungsteil 62 und das äußere Kupplungsteil 60 in ihrem Überlappungsbereich dichtend miteinander in Anlage. Dazu ist in der Nähe des axialen Endes des inneren Kupplungsteils 62 eine Anlagefläche 68 ausgebildet, welche sich ringförmig um den Außenumfang des inneren Kupplungsteils 62 erstreckt. Die Anlagefläche 68 bzw. der Anlagering 68 hat einen Querschnitt von nach außen gerichteter konvexer Form, wobei sein Scheitelbereich bzw. seine Scheitellinie am Innenumfang des äußeren Kupplungsteils 60 angreift. Durch die ballige bzw. konvexe Ausgestaltung des Anlageringes 48 wird es möglich, einen Winkelversatz zwischen dem inneren Kupplungsteil 62 und dem äußeren Kupplungsteil 60 bzw. den mit diesen verbundenen Wellenabschnitten bezüglich der Längsachse X auszugleichen. Zur zusätzlichen Abdichtung und um die Anlagefläche 68 vor Verunreinigungen zu schützen, sind in axialer Richtung seitlich der Anlagefläche 68 zwei O-Ringe 70 am Außenumfang des inneren Kupplungsteils 62 angeordnet.

Zum Ausgleich des Winkelversatzes ist es besonders von Vorteil, dass die Anlagefläche bzw. der Anlagering 68 in einer Querschnittsebene mit dem Lager 48 bzw. der Lagerfläche 72 an dem äußeren Kupplungsteil 60 liegt, so dass ein Drehen bzw. Verschwenken aneinander angrenzender Wellenabschnitte genau im Bereich des Lagers 48 erfolgt.

**Bezugszeichenliste**

| | | |
|---|---|---|
| 2 | - | Filterscheiben |
| 4 (4a, 4b, 4c) | - | Welle (Wellenabschnitte) |
| 6, 8, 10 | - | Module |
| 12 | - | Wellenkupplungen |
| 14 | - | Antriebsmotor |
| 16 | - | Wellenende |
| 18 | - | Deckel |
| 20 | - | Lagereinrichtungen |
| 21 | - | Führungsschienen |
| 22 | - | Stützring |
| 24 | - | Spannelement |
| 26 | - | Betätigungsstange |
| 28 | - | Eingriffselemente |
| 30 | - | Keilelemente |
| 32 | - | Keilflächen |
| 34 | - | Keilelemente |
| 36 | - | Gewindebohrung |
| 38 | - | Klammer |
| 40 | - | Schenkel |
| 42 | - | Bohrung |
| 44 | - | Speichen |
| 46 | - | Lagerträger |
| 48 | - | Lager |
| 49 | - | Speichen |
| 50 | - | Rohr |
| 52 | - | Spannring |
| 54 | - | Spannschrauben |
| 56 | - | Spannelemente |
| 58 | - | hydraulische Spanneinrichtung |
| 60 | - | äußeres Kupplungsteil |
| 62 | - | inneres Kupplungsteil |
| 64, 66 | - | Klauen |
| 67 | - | Elastomerelemente |
| 68 | - | Anlagefläche bzw. Anlagering |
| 70 | - | O-Ringe |
| 72 | - | Lagerfläche |
| X | - | Längsachse |
| r | - | radialer Abstand |
| A | - | Drehrichtung |

## Patentansprüche

1. Filter- oder Reaktoreinsatz mit einer drehbaren zentralen Welle (4) und zumindest einem daran angebrachten Filter- oder Reaktorelement (2),
**gekennzeichnet durch** zumindest eine Lagereinrichtung (20) mit einem im Zentralbereich der Lagereinrichtung (20) angeordneten Lager (48), in welchem die Welle (4) drehbar gelagert ist,
zumindest einem radial nach außen von dem Lager beabstandeten Stützelement (22), welches mit dem Lager (48) über zumindest ein Verbindungselement 44 verbunden ist, und
zumindest einem Spannelement (24; 52,) über welches das Stützelement (22) im Inneren eines den Filter- oder Reaktoreinsatz aufnehmenden Rohres (50) an dessen Innenwandung verspannbar ist.

2. Filter- oder Reaktoreinsatz nach Anspruch 1, **dadurch gekennzeichnet, dass** das Stützelement ein Stützring (22) ist, welcher zur Anlage an der Innenwandung eines den Filter- oder Reaktoreinsatz aufnehmenden Rohres (50) ausgebildet ist.

3. Filter- oder Reaktoreinsatz nach Anspruch 1 oder 2, **dadurch gekennzeichnet, dass** das Stützelement (22) über zumindest eine Speiche (44) mit dem Lager (48) verbunden ist, wobei die Speiche (44) vorzugsweise derart ausgebildet ist, dass der radiale Abstand (r) zwischen Lager (48) und Stützelement (22) veränderbar ist, bevorzugt zur Zentrierung des Lagers (48).

4. Filter- oder Reaktoreinsatz nach Anspruch 2 und 3, **dadurch gekennzeichnet, dass** das Lager (48) und der Stützring (22) über zumindest drei, vorzugsweise in gleichen Winkelabständen zueinander angeordnete Speichen (44) miteinander verbunden sind.

5. Filter- oder Reaktoreinsatz nach Anspruch 3 oder 4, **dadurch gekennzeichnet, dass** die zumindest eine Speiche (44) elastisch ausgebildet ist und/oder mit einem axialen Ende schwenkbar mit dem Lager (48) und ihrem entgegengesetzten axialen Ende schwenkbar mit dem Stützelement (22) verbunden ist.

6. Filter- oder Reaktoreinsatz nach einem der vorangehenden Ansprüche, **dadurch gekennzeichnet, dass** das zumindest eine Spannelement (24; 52) nach dem Einsetzen des Filter oder Reaktoreinsatzes in ein Rohr (50) von außen und/oder einem Axialende des Rohres (50) her betätigbar ist.

7. Filter- oder Reaktoreinsatz nach einem der vorangehenden Ansprüche, **dadurch gekennzeichnet, dass** das zumindest eine Spannelement ein Spannring (52) ist, welcher von außen um das den Filter- oder Reaktoreinsatz aufnehmende Rohr (50) spannbar ist, um das Rohr an dem Stützelement (22) zu verspannen.

8. Filter- oder Reaktoreinsatz nach Anspruch 6, **dadurch gekennzeichnet, dass** das zumindest eine Spannelement (24) mit einem Betätigungselement (26) versehen ist, welches sich ausgehend von dem Spannelement zu einem Axialende des Filter- oder Reaktoreinsatzes erstreckt, so dass es nach dem Einsetzen des Filter- oder Reaktoreinsatzes in ein Rohr (50) von einem Axialende des Rohres (50) her vorzugsweise drehend betätigbar ist.

9. Filter- oder Reaktoreinsatz nach Anspruch 8, **dadurch gekennzeichnet, dass** mehrere Lagereinrichtungen (20) vorgesehen sind, von denen jede jeweils zumindest ein Spannelement (24) aufweiset, wobei jede Lagereinrichtung (20) jeweils mit einem Betätigungselement (26) zur Betätigung des zu dieser Lagereinrichtung (20) gehörigen Spannelementes (24) versehen ist.

10. Filter- oder Reaktoreinsatz nach einem der vorangehenden Ansprüche, **dadurch gekennzeichnet, dass** Stützelement (22) als Stützring ausgebildet ist und zumindest Spannelement (24) an oder in dem Stützring (22) derart angeordnet ist, dass über das Spannelement (24) der Umfang des Stützringes (22) veränderbar ist.

11. Filter- oder Reaktoreinsatz nach Anspruch 10, **dadurch gekennzeichnet, dass** das zumindest eine Spannelement (24) zumindest zwei Keilelemente (30, 34) mit schräg zur Umfangsrichtung des Stützringes (22) und vorzugsweise schräg zur Axialrichtung (X) des Filter- oder Reaktoreinsatzes gerichteten, aneinander anliegenden Keilflächen aufweist, wobei die Keilelemente (30, 34) zum Spannen quer zur Umfangsrichtung, vorzugsweise mittels einer Stellschraube aufeinander zu bewegbar sind

12. Filter- oder Reaktoreinsatz nach einem der vorangehenden Ansprüche, **dadurch gekennzeichnet, dass** das zumindest eine Spannelement (24) ein Federelement aufweist, durch welches mittels Federkraft das Stützelement (22) in dem Rohr verspannbar ist.

13. Filter- oder Reaktoreinsatz nach einem der vorangehenden Ansprüche, **dadurch gekennzeichnet, dass** das zumindest eine Spannelement (58) als hydraulisches oder pneumatisches Spannelement ausgebildet ist.

14. Filter- oder Reaktoreinsatz nach einem der vorangehenden Ansprüche, **dadurch gekennzeichnet, dass** am Außenumfang des Filter- oder Reaktoreinsatzes sich in axialer Richtung (X) erstreckende Führungsschienen (21) angeordnet sind, welche vorzugsweise mehrere axial beabstandete Stützelemente (22) miteinander verbinden.

15. Filter- oder Reaktoreinsatz nach einem der vorangehenden Ansprüche, **dadurch gekennzeichnet, dass** die Welle (4) in mehrere Abschnitte (4a, 4b, 4c) mit jeweils zumindest einem daran angeordneten Filter- oder Reaktorelement (2) unterteilt ist, wobei die Abschnitte (4a, 4b, 4c) über Wellenkupplungen (12) miteinander verbunden sind und die Welle im Bereich einer Wellenkupplung, vorzugsweise an allen Wellenkupplungen (12), in dem Lager 48 einer Lagereinrichtung (20) gelagert ist.

16. Filter- oder Reaktoreinsatz nach Anspruch 15, bei welcher die Wellenkupplungen (12) einen mit einem ersten Abschnitt der Welle (4) verbundenen äußeren Kupplungsteil (60) und einen mit einem angrenzenden zweiten Abschnitt der Welle (4) verbundenen inneren Kupplungsteil (62), welcher in den äußeren Kupplungsteil (60) eingreift, aufweisen, wobei der innere Kupplungsteil (62) an seinem Außenumfang einen im Querschnitt konvexen Anlagering (68) aufweist, an welchem der äußere Kupplungsteil (60) mit seinem Innenumfang anliegt.

17. Filter- oder Reaktoreinsatz nach Anspruch 16, **dadurch gekennzeichnet, dass** in axialer Richtung (X) des Filter- oder Reaktoreinsatzes gesehen im Bereich des konvexen Anlageringes (68) das Lager (48) der zumindest einen Lagereinrichtung (20) angeordnet ist.

18. Filter- oder Reaktoreinsatz nach Anspruch 16 oder 17, **dadurch gekennzeichnet, dass** in axialer Richtung (X) vor und/oder hinter dem Anlagering (68) zwischen dem inneren (62) und dem äußeren Kupplungsteil (60) ein Dichtungsring (70) angeordnet ist.

19. Filter- oder Reaktorvorrichtung, **gekennzeichnet durch** ein Rohr (50), in welches ein Filter- oder Reaktoreinsatz gemäß einem der vorangehenden Ansprüche vorzugsweise entnehmbar eingesetzt ist.

## Claims

1. A filter- or reactor insert with a rotatable central shaft (4) and at least one filter- or reactor element (2) attached thereon,
**characterised by** at least one bearing device (20) with a bearing (48) arranged in the central region of the bearing device (20), in which the shaft (4) is rotatably mounted,
at least one support element (22) which is distanced radially outwards from the bearing and which is connected to the bearing (48) via at least one connection element (44), and
at least one clamping element (24;52) via which the support element (22) may be braced in the inside of a tube (50) accommodating the filter- or reactor insert, on the inner wall of the tube.

2. A filter or reactor insert according to claim 1, **characterised in that** the support element is a support ring (22) which is designed for bearing on the inner wall of a tube (50) accommodating the filter- or reactor insert.

3. A filter- or reactor insert according to claim 1 or 2, **characterised in that** the support element (22) is connected to the bearing (48) via at least one spoke (44), wherein the spoke (44) is preferably designed in a manner such that the radial distance (r) between the bearing (48) and the support element (22) may be changed, preferably for centring the bearing (48).

4. A filter- or reactor insert according to claim 2 and 3, **characterised in that** the bearing (48) and the support ring (22) are connected to one another via at least three spokes (44) which are preferably arranged at equal angular distances to one another.

5. A filter- or reactor insert according to claim 3 or 4, **characterised in that** the at least one spoke (44) is designed in an elastic manner and/or with one axial end is pivotably connected to the bearing (48), and with its opposite axial end is pivotably connected to the support element (22).

6. A filter- or reactor insert according to one of the preceding claims, **characterised in that** the at least one clamping element (24; 52), after the insertion of the filter- and/or reactor insert into a tube (50,) may be actuated from the outside and/or from an axial end of the tube (50).

7. A filter- or reactor insert according to one of the preceding claims, **characterised in that** the at least one clamping element is a clamping ring (52), which may be clamped from the outside around the tube (50) accommodating the filter- or reactor insert, in order to brace the tube on the support element (22).

8. A filter- or reactor insert according to claim 6, **characterised in that** the at least one clamping element (24) is provided with an actuation element (26), which, proceeding from the clamping element, extends to an axial end of the filter- or reactor insert, so that after the insertion of the filter- or reactor insert into a tube (50), it may be actuated, preferably in a rotating manner, from an axial end of the tube (50).

9. A filter- or reactor insert according to claim 8, **characterised in that** several bearing devices (20) are provided, of which each in each case comprises at least one clamping element (24), wherein each bearing device (20) is provided in each case with an actuation element (26) for actuating the clamping element (24) belonging to this bearing device (20).

10. A filter- or reactor insert according to one of the preceding claims, **characterised in that** the support element (22) is designed as a support ring and at least one clamping element (24) is arranged on or in the support ring (22), in a manner such that the periphery of the support ring (22) may be changed via the clamping element (24).

11. A filter- or reactor insert according to claim 10, **characterised in that** the at least one clamping element (24) comprises at least two wedge elements (30, 34) with wedge surfaces which bear on one another and which are directed obliquely to the peripheral direction of the support ring (22) and preferably obliquely to the axial direction (X) of the filter- or reactor insert, wherein the wedge elements (30, 34) are movable towards one another, preferably by way of an adjusting screw, for clamping transversely to the peripheral direction.

12. A filter- or reactor insert according to one of the preceding claims, **characterised in that** the at least one clamping element (24) comprises a spring element, by way of which the support element (22) may be braced in the tube by way of spring force.

13. A filter- or reactor insert according to one of the preceding claims, **characterised in that** the at least one clamping element (58) is designed as a hydraulic or pneumatic clamping element.

14. A filter- or reactor insert according to one of the preceding claims, **characterised in that** guide rails (21) extending in the axial direction (X) are arranged on the outer periphery of the filter- or reactor insert, and connect preferably several axially distanced support elements (22) to one another.

15. A filter- or reactor insert according to one of the preceding claims, **characterised in that** the shaft (4) is subdivided into several sections (4a, 4b, 4c) with in each case at least one filter- or reactor element (2) arranged thereon, wherein the sections (4a, 4b, 4c) are connected to one another via shaft couplings (12), and the shaft in the region of a shaft coupling, preferably at all shaft couplings (12), is mounted in the bearing (48) of a bearing device (20).

16. A filter- or reactor insert according claim 15, with which the shaft couplings (12) comprise an outer coupling part (60) connected to a first section of the shaft (4), and an inner coupling part (62) which is connected to an adjacent, second section of the shaft (4) and which engages into the outer coupling part (60), wherein the inner coupling part (62) on its outer periphery comprises a bearing ring (68) which is convex in cross section and on which the outer coupling part (60) bears with its inner periphery.

17. A filter- or reactor insert according to claim 16, **characterised in that** the bearing (48) of the at least one bearing device (20) is arranged in the region of the convex bearing ring (68), seen in the axial direction (X) of the filter- or reactor insert.

18. A filter- or reactor insert according to claim 16 or 17, **characterised in that** a sealing ring (70) is arranged between the inner (62) and the outer coupling part (60), in front of and/or behind the bearing ring (68) in the axial direction (X).

19. A filter- or reactor device, **characterised by** a tube (50) into which a filter- or reactor insert according to one of the preceding claims is inserted, preferably in a removable manner.

## Revendications

1. Insert de filtre ou de réacteur comprenant un arbre central (4) rotatif et au moins un élément de filtre ou de réacteur (2) disposé sur celui-ci,
**caractérisé par** au moins un dispositif de support (20) comprenant un palier (48) disposé dans la région centrale du dispositif de support (20), dans lequel l'arbre (4) est monté en rotation,
au moins un élément d'appui (22) radialement éloigné du palier vers l'extérieur, qui est relié au palier (48) par l'intermédiaire d'au moins un élément de liaison (44), et
au moins un élément de serrage (24 ; 52) permettant de serrer l'élément d'appui (22) à l'intérieur d'un tube (50) recevant l'insert de filtre ou de réacteur sur la paroi intérieure dudit tube.

2. Insert de filtre ou de réacteur selon la revendication 1, **caractérisé en ce que** l'élément d'appui est une bague d'appui (22) conçue pour être appliquée contre la paroi intérieure du tube (50) recevant l'insert de filtre ou de réacteur.

3. Insert de filtre ou de réacteur selon la revendication 1 ou 2, **caractérisé en ce que** l'élément d'appui (22) est relié au palier (48) par l'intermédiaire d'au moins un rayon (44), le rayon (44) étant, de préférence, réalisé de sorte que la distance radiale (r) entre le palier (48) et l'élément d'appui (22) peut être modifiée, de préférence pour le centrage du palier (48).

4. Insert de filtre ou de réacteur selon la revendication 2 et 3, **caractérisé en ce que** le palier (48) et la bague d'appui (22) sont reliés entre eux par l'intermédiaire d'au moins trois rayons (44) disposés, de préférence, à intervalles angulaires identiques les uns des autres.

5. Insert de filtre ou de réacteur selon la revendication 3 ou 4, **caractérisé en ce que** ledit au moins un rayon (44) est réalisé de manière élastique et/ou est relié en pivotement au palier (48) par une extrémité axiale et en pivotement à l'élément d'appui (22) par son extrémité axiale opposée.

6. Insert de filtre ou de réacteur selon l'une des revendications précédentes, **caractérisé en ce que** ledit au moins un élément de serrage (24 ; 52) peut être actionné, après introduction de l'insert de filtre ou de réacteur dans un tube (50), de l'extérieur et/ou à partir d'une extrémité axiale du tube (50).

7. Insert de filtre ou de réacteur selon l'une des revendications précédentes, **caractérisé en ce que** ledit au moins un élément de serrage est une bague de serrage (52) qui peut être serrée de l'extérieur autour du tube (50) recevant l'insert de filtre ou de réacteur pour serrer le tube sur l'élément d'appui (22).

8. Insert de filtre ou de réacteur selon la revendication 6, **caractérisé en ce que** ledit au moins un élément de serrage (24) est muni d'un élément d'actionnement (26) qui s'étend à partir de l'élément de serrage jusqu'à une extrémité axiale de l'insert de filtre ou de réacteur de manière à pouvoir être actionné, après introduction de l'insert de filtre ou de réacteur dans un tube (50), de préférence en rotation à partir d'une extrémité axiale du tube (50).

9. Insert de filtre ou de réacteur selon la revendication 8, **caractérisé en ce que** plusieurs dispositifs de support (20) sont prévus, dont chacun présente respectivement au moins un élément de serrage (24), chaque dispositif de support (20) étant muni respectivement d'un élément d'actionnement (26) pour actionner l'élément de serrage (24) appartenant à ce dispositif de support (20).

10. Insert de filtre ou de réacteur selon l'une des revendications précédentes, **caractérisé en ce que** l'élément d'appui (22) est réalisé sous forme de bague d'appui et au moins un élément de serrage (24) est disposé sur ou dans la bague d'appui (22) de sorte que, par l'intermédiaire de l'élément de serrage (24), la circonférence de la bague d'appui (22) peut être modifiée.

11. Insert de filtre ou de réacteur selon la revendication 10, **caractérisé en ce que** ledit au moins un élément de serrage (24) présente au moins deux éléments de coin (30, 34) dont les faces sont en contact mutuel et orientées en oblique par rapport à la direction circonférentielle de la bague d'appui (22) et de préférence en oblique par rapport à la direction axiale (X) de l'insert de filtre ou de réacteur, les éléments de coin (30, 34) pouvant être, pour le serrage, amenés l'un contre l'autre transversalement à la direction circonférentielle, de préférence au moyen d'une vis de réglage.

12. Insert de filtre ou de réacteur selon l'une des revendications précédentes, **caractérisé en ce que** ledit au moins un élément de serrage (24) présente un élément ressort permettant de serrer, sous l'effet de la force du ressort, l'élément d'appui (22) dans le tube.

13. Insert de filtre ou de réacteur selon l'une des revendications précédentes, **caractérisé en ce que** ledit au moins un élément de serrage (58) est réalisé sous forme d'élément de serrage hydraulique ou pneumatique.

14. Insert de filtre ou de réacteur selon l'une des revendications précédentes, **caractérisé en ce que**, sur la périphérie extérieure de l'insert de filtre ou de réacteur, des rails de guidage (21) s'étendant en direction axiale (X) sont disposés, qui relient entre eux de préférence plusieurs éléments d'appui (22) axialement espacés les uns des autres.

15. Insert de filtre ou de réacteur selon l'une des revendications précédentes, **caractérisé en ce que** l'arbre (4) est divisé en plusieurs tronçons (4a, 4b, 4c) comprenant chacun au moins un élément de filtre ou de réacteur (2) disposé dessus, les tronçons (4a, 4b, 4c) étant reliés entre eux par l'intermédiaire d'accouplements d'arbre (12), et **en ce que** l'arbre, dans la région d'un accouplement d'arbre, de préférence sur tous les accouplements d'arbre (12), est logé dans le palier (48) d'un dispositif de support (20).

16. Insert de filtre ou de réacteur selon la revendication 15, dans lequel les accouplements d'arbre (12) présentent un élément d'accouplement extérieur (60) relié à un premier tronçon de l'arbre (4) et un élément d'accouplement intérieur (62) relié à un deuxième tronçon adjacent de l'arbre (4), qui s'engage dans l'élément d'accouplement extérieur (60), l'élément d'accouplement intérieur (62) présentant, sur sa périphérie extérieure, une bague d'appui (68) de section transversale convexe, contre laquelle s'appuie l'élément d'accouplement extérieur (60) par sa périphérie intérieure.

17. Insert de filtre ou de réacteur selon la revendication 16, dans lequel, vu dans la direction axiale (X) de l'insert de filtre ou de réacteur, le palier (48) dudit au moins un dispositif de support (20) est disposé dans la région de la bague d'appui (68) convexe.

18. Insert de filtre ou de réacteur selon la revendication 16 ou 17, **caractérisé en ce que**, dans la direction axiale (X) en amont et/ou en aval de la bague d'appui (68), une bague d'étanchéité (70) est disposée entre l'élément d'accouplement intérieur (62) et l'élément d'accouplement extérieur (60).

19. Dispositif de filtre ou de réacteur, **caractérisé par** un tube (50) dans lequel est inséré, de préférence de manière amovible, un insert de filtre ou de réacteur selon l'une des revendications précédentes.
